# EUROPEAN PATENT SPECIFICATION

(11) **EP 0 531 113 B1**
(45) Date of publication and mention of the grant of the patent: **16.07.1997**
(21) Application number: 92307969.3
(22) Date of filing: 02.09.1992
(51) Int. Cl.: G11B 33/04

(54) **Case for a disc cartridge**
Behälter für Plattenkassette
Réceptacle pour cassette à disque

(30) Priority: 04.09.1991 JP 253109/91
(43) Date of publication of application: 10.03.1993
(73) Proprietor: SONY CORPORATION, Tokyo 141 (JP)
(72) Inventor: Mizuno, Tomio, c/o Patents Div., Sony Corp., Shinagawa-ku, Tokyo 141 (JP); Kobayashi, Shinkichi, c/o Patents Div., Sony Corp., Shinagawa-ku, Tokyo 141 (JP)
(74) Representative: Purvis, William Michael Cameron

(56) References cited:
- EP-A- 0 186 359
- FR-A- 2 620 258
- GB-A- 2 064 486
- GB-A- 2 129 779
- US-A- 4 886 166
- IBM TECHNICAL DISCLOSURE BULLETIN. vol. 27, no. 10A, March 1985, NEW YORK US page 5809 'Plastic packaging for the personal computer software.'

## Description

The invention relates to a case for a disc cartridge, which disc cartridge includes a disc as a recording medium, to accommodate the disc cartridge when it is not in use.

A conventional disc accommodating case to accommodate therein an optical disc, such as a compact disc (CD), recording medium has an engagement projection that is in resilient engagement with a central aperture of the CD and is provided at a middle portion of a case body. A recess into which the CD is fitted is formed in the case body so as to surround the engagement projection, and a lid made of a transparent synthetic resin is provided on the case body so as to be freely rotatable (see patent specifications US-A-4,874,085 and US-A-4,535,888).

When the optical disc is accommodated in a disc cartridge, an opening portion through which a central aperture of the disc is exposed is generally closed by a shutter in order to protect the optical disc, ie in order to prevent dust from entering the disc cartridge and to prevent the disc from being directly smudged by finger contact. For this reason, in a conventional disc cartridge case, the optical disc cannot be held at the central aperture thereof unlike the aforesaid disc accommodating case.

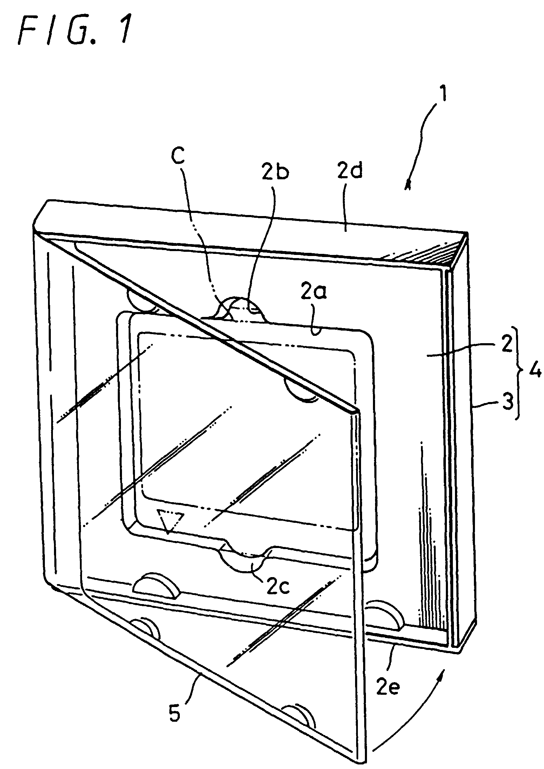

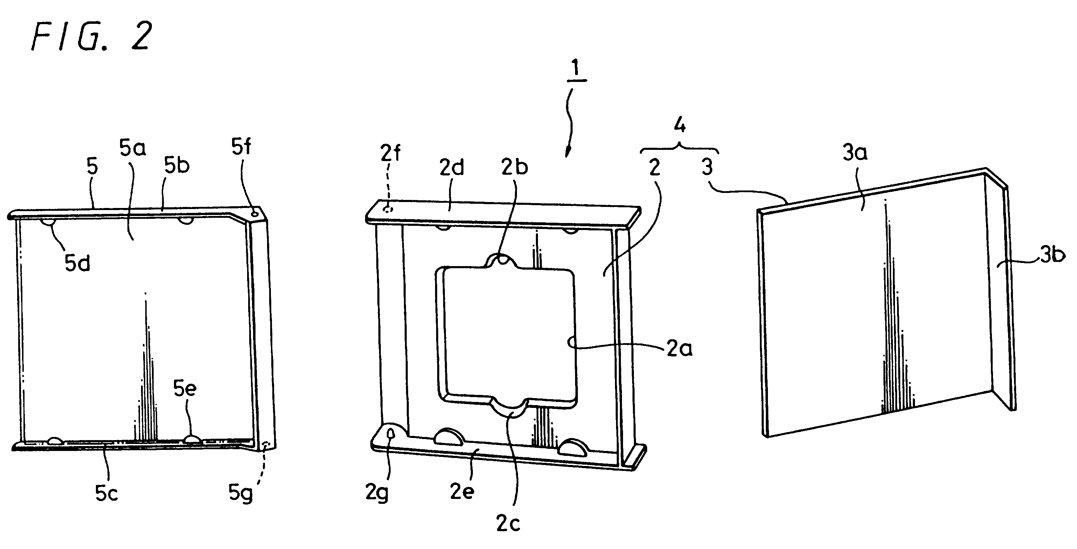

Figures 1 and 2 of the accompanying drawings show a case that accommodates therein a disc cartridge.

A case 1 shown in Figures 1 and 2 comprises a case body 4, formed of a cartridge holding frame 2 and a bottom plate 3, and a transparent cover 5. In the case 1, the cartridge holding frame 2 of the case body 4 has in its middle portion an accommodating recess portion 2a of rectangular configuration that is matched with the outer configuration of a disc cartridge C to be accommodated. Further recesses 2b, 2c are integrally communicated with the accommodating recess 2a so that a user can withdraw the disc cartridge C accommodated within the accommodating recess 2a by engaging fingers in the further recesses 2b, 2c. Projections 2f, 2g, which serve as hinges for coupling the transparent cover 5 to the case body 4, are respectively formed on the rear end inner surfaces of two side wall portions 2e, 2d. The bottom plate 3 is made of a transparent synthetic resin and comprises a bottom wall portion 3a corresponding to a lower surface of the support frame 2 and a front wall portion 3b corresponding to a front wall portion of the holding frame 2 in an L-shaped configuration in cross section so that the user can visually confirm from the outside an index sheet disposed between the lower surface of the holding frame 2 and the bottom wall portion 3a.

The transparent cover 5 is made of a transparent synthetic resin and comprises a flat surface portion 5a corresponding to the upper surface of the holding frame 2 and two side wall portions 5b, 5c corresponding to inside surfaces of the two side wall portions 2d, 2e of the holding frame 2 in a U-configuration in cross section. A plurality of ratchets 5d, 5e, which project inwardly, are provided on the two side wall portions 5b, 5c, to hold a song text card, an index card or the like inserted from the front edge of the flat portion 5a.

The transparent cover 5 is rotatably coupled to the holding frame 2, ie the case body 4 by fitting recesses 5f, 5g formed on the rear end outer surfaces of the two side wall portions 5b, 5c onto the projections 2f, 2g, thereby to assemble the case 1. The recesses 5f, 5g and the projections 2f, 2g may be replaced by projections formed on the transparent cover 5 and recesses formed through the holding frame 2.

If the disc cartridge C should be a little larger than the accommodating recess 2a of the cartridge holding frame 2, then it may not be possible to accommodate the disc cartridge C in the disc cartridge case 1 shown in Figures 1 and 2 in extreme cases. Even if the disc cartridge C can be accommodated, it possibly cannot be withdrawn from the disc cartridge case 1. Further, when the disc cartridge C is inserted into and withdrawn from the disc cartridge case 1, there is then the risk that the disc cartridge C itself will be deformed or damaged by an undesirable load applied thereto.

Because the disc cartridge C itself is thin, the depth of the accommodating recess 2a and of the further recesses 2b, 2c of the cartridge hold frame 2 is also reduced. Consequently, if the outer dimension of the disc cartridge C is a little larger than the size of the accommodating recess 2a as described above, then the user inserts and withdraws the disc cartridge C from the disc cartridge case 1 using only two fingers. Moreover, the strength with which the user can hold the disc cartridge C through the further recesses 2b, 2c*,* ie the force which can be applied by fingers, is reduced so that the user cannot withdraw the disc cartridge C from the disc cartridge case 1. In addition, those who have large fingers cannot withdraw the disc cartridge C from the disc cartridge case 1 at all. Conversely, if the accommodating concave portion 2a is made much larger than the disc cartridge C, then the disc cartridge C cannot be stably accommodated in the disc cartridge case 1, such as when the disc cartridge C is loose in the accommodating concave portion 2a and can be dropped therefrom.

Patent Specification EP-A-0 186 359 discloses a case of transparent plastics material for a floppy disc comprising two planar members joined by integral hinges to a spine portion, one of the planar members having end walls joined by a side wall and having a plurality of integral resilient holding members to hold a disc cartridge, the other planar member has a pocket to hold a sheet of identification material.

Patent Specification GB-A-2 129 779 discloses a case for holding recording media comprising a tray with a pivoted lid, members being provided to project from the base of the tray to sub-divide the tray into holders for recording media and informative or promotional material.

According to one aspect of the invention, there is provided a case for a disc cartridge comprising:
a cover; and
a case body having the cover rotatably attached thereto and having integrally formed on its bottom wall a plurality of resilient holding members resiliently to hold a disc cartridge;
characterised in that slots are formed through the bottom wall of the case body around and adjacent outer circumferential surfaces of the resilient holding members so that portions of the bottom wall on which the resilient members are formed can be displaced in a direction perpendicular to the plane of the bottom wall.

Since the disc cartridge is resiliently held by the resilient holding members, the disc cartridge can be reliably accommodated within the case so that the disc cartridge is prevented from being violently moved and from being dropped from the case. Also, the disc cartridge can be taken out from the case by pulling the disc cartridge against the resilient force of the resilient holding members.

With such a case a disc cartridge can be accommodated and withdrawn with ease regardless of the size of the user's fingers.

The invention is diagrammatically illustrated by way of example in the accompanying drawings, in which:
Figure 1 is a perspective view of an example of a conventional disc cartridge case;
Figure 2 is an exploded perspective view of the conventional disc cartridge case shown in Figure 1;
Figure 3 is a perspective view of a disc cartridge case according to a first embodiment of the invention and illustrating a condition in which a cover of the case is open;
Figure 4 is an exploded perspective view of the disc cartridge case of the first embodiment;
Figure 5 is a plan view of a case body of the disc cartridge case of the first embodiment;
Figure 6 is a cross-sectional view of the case body of the disc cartridge case of the first embodiment;
Figure 7 is a rear view of the case body of the disc cartridge case of the first embodiment;
Figures 8A and 8B are diagrams used to explain a resilient holding portion provided in a case body resiliently to hold a disc cartridge;
Figure 9 is a diagram used to explain a modified example of the resilient holding portion;
Figure 10 is a plan view of a case body of a disc cartridge case according to a second embodiment of the invention;
Figure 11 is a plan view of a case body of a disc cartridge case according to a third embodiment of the invention;
Figure 12 is a cross-sectional view of a further example of an elastic holding portion of the case body;
Figure 13 is a perspective view of a case body of a disc cartridge case according to a fourth embodiment of the invention;
Figure 14 is a schematic plan view illustrating a case body of the fourth embodiment; and
Figure 15 is a cross-sectional vie taken on line XV-XV in Figure 14.

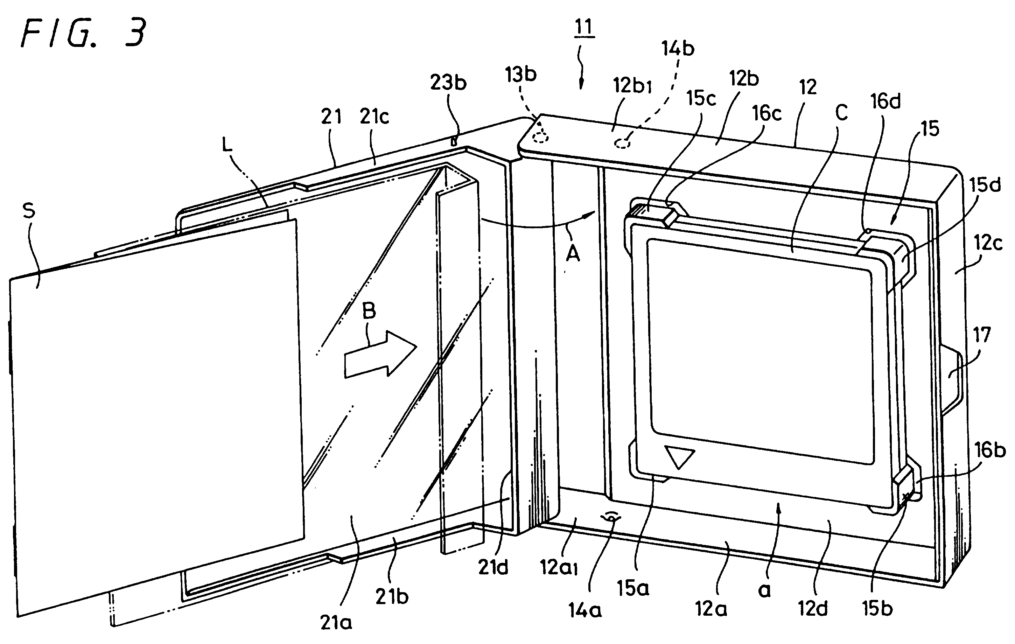

A disc cartridge case 11 according to a first embodiment of the invention will now be described with reference to Figures 3 to 9.

The disc cartridge case comprises a one piece case body 12 and a transparent cover 21 that is attached to the case body 12 so as to be freely rotatable.

As illustrated, the case body 12 of the case 11 has, extending at right angles from a bottom wall 12d, respective wall portions 12a, 12b and 12c to form an accommodating space a. End portions 12a₁, 12b₁ of the pair of opposing side walls (hereinafter referred to as two side wall portions) 12a, 12b project outwardly beyond the end edge of the bottom wall 12d by a predetermined length. The side wall portions 12a, 12b, 12c and the bottom wall 12d are integrally moulded of a synthetic resin material such as ABS resin (acrylonitrile-butadiene-styrene copolymer) to form the case body 12.

On the facing surfaces of the projecting end portions 12a₁, 12b₁ of the two side wall portions 12a, 12b, hinge projections (or recesses) 13a, 13b are coaxially provided to engage hinge recesses (or projections) of the transparent cover 21. Further, on the facing surfaces of the two side wall portions 12a, 12b, engagement recesses (or projections) 14a, 14b are formed spaced inwardly from the hinge projections (or concave portions) 13a, 13b.

A resilient holder 15 resiliently to hold a disc cartridge C is disposed on the bottom wall 12d of the case body 12.

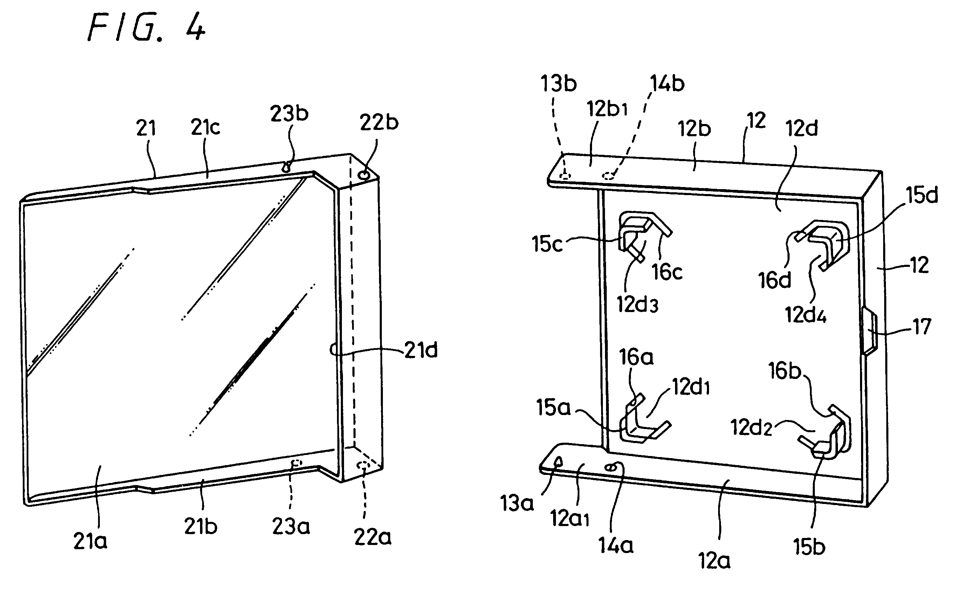

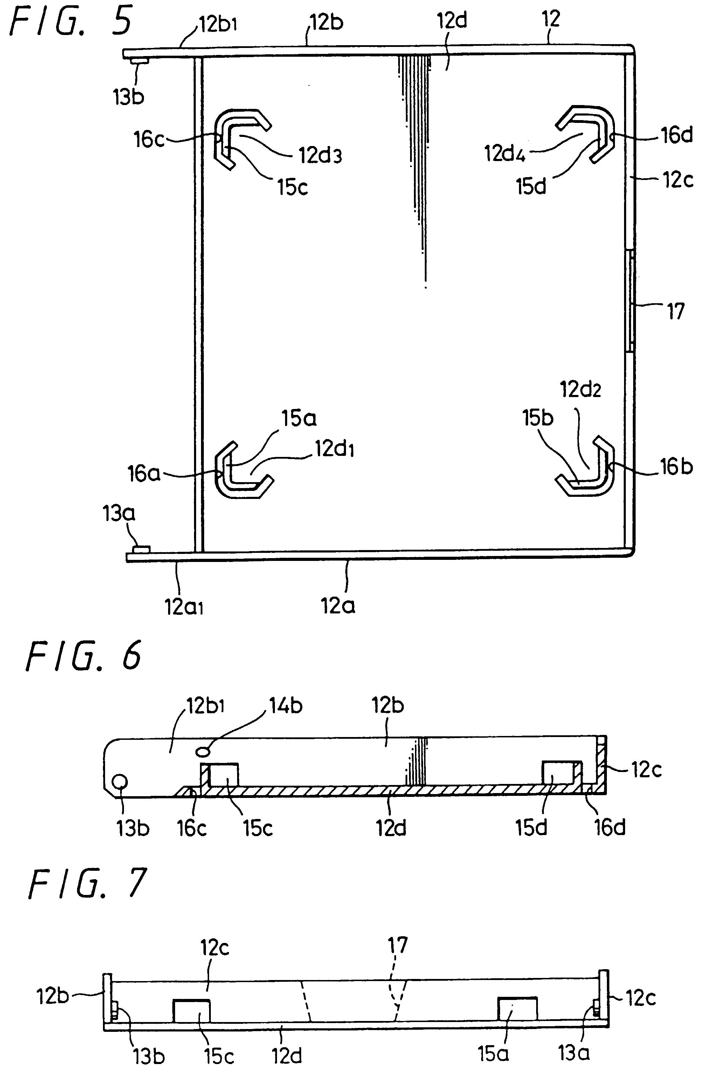

The resilient holder 15 comprises resilient holding members 15a, 15b, 15c, 15d which are integrally formed with the bottom wall 12d at four positions corresponding to four corners of the disc cartridge C to be accommodated. Each of the resilient holding members 15a, 15b, 15c, 15d is substantially L-shaped in cross section. Four slots 16a, 16b, 16c, 16d are formed through the bottom wall 12d around the outer circumferential surfaces of the resilient holding members 15a, 15b, 15c. 15d, respectively, whereby portions 12d₁, 12d₂, 12d₃, 12d₄ (Figures 4 and 5) of the bottom wall 12d on which the resilient members 15a, 15b, 15c, 15d are formed can be displaced in a direction perpendicular to the plane of the bottom wall 12d.

In the middle of the outer edge of the wall portion 12c (hereinafter referred to as the front wall portion) that couples the two side wall portions 12a, 12b, a concave portion 17, which is concave toward the edge adjacent the bottom wall 12d, is formed so as to grip the finger when the user opens the transparent cover 21.

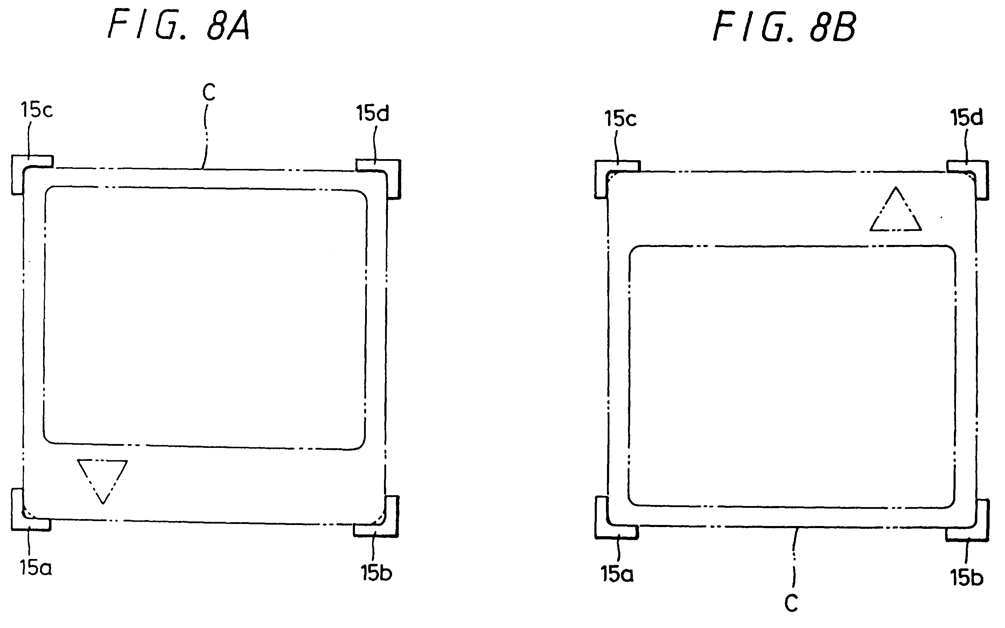

If the resilient holding members 15a to 15d provided on the bottom wall 12d of the case body 12 have a substantially right-angled square inner surface as shown in Figures 8A and 8B, then a disc cartridge C whose front and rear corners are different in shape can be accommodated in the resilient holder 15 in opposite orientations.

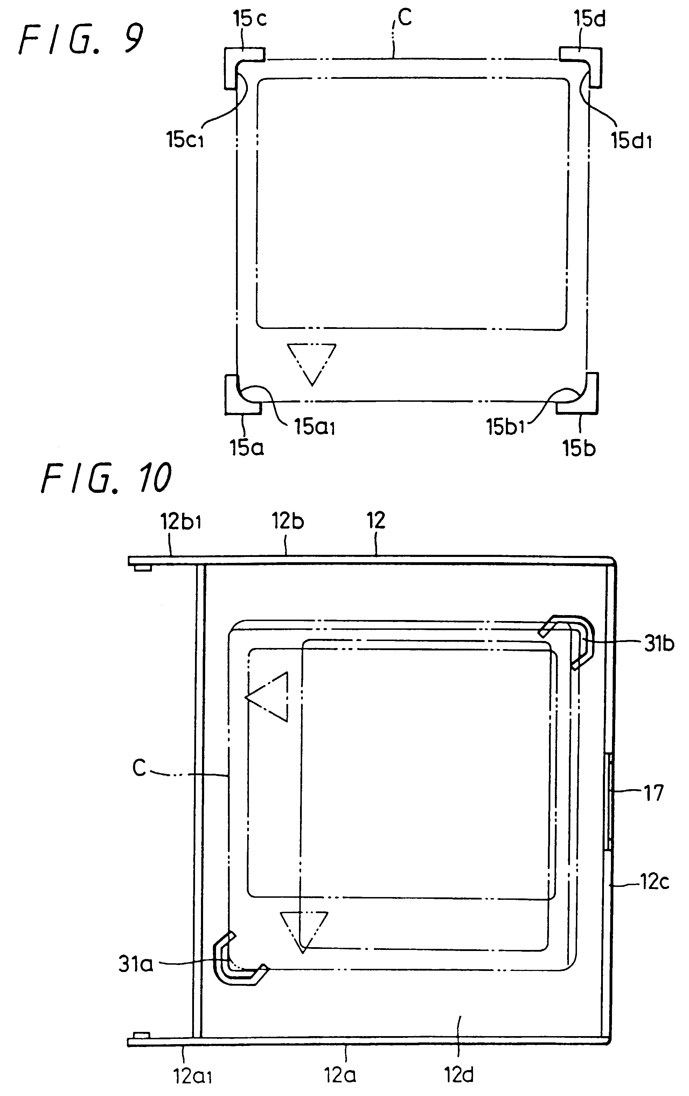

Alternatively, the resilient holding members 15a to 15d may respectively be formed in association with the shapes of the corresponding corners of the disc cartridge C. That is, as shown in the modified embodiment of Figure 9, inner surfaces 15a₁, 15b₁ of the resilient holding members 15a, 15b corresponding to the two front corners may be rounded, whereas inner surfaces 15c₁, 15d₁ of the resilient holding members 15c, 15d corresponding to the two rear corners may be substantially right-angled square.

In this case, the orientation in which the disc cartridge C can be accommodated into the case 1 is restricted to a predetermined orientation.

The transparent cover 21 which can be rotatably attached to the case body 12 is integrally moulded of a transparent synthetic resin material. As shown in Figures 3 and 4, the transparent cover 21 comprises a flat wall portion 21a, two side wall portions 21b, 21c inclined upwardly from substantially central portions to the rear portions of the two side wall portions 21b, 21c and a pocket portion 21d formed between the rear end portions of the two side wall portions 21b, 21c.

On the rear outer surfaces of the two side wall portions 21b, 21c of the transparent cover 21, coaxial hinge recesses (or projection) 22a, 22b are provided to be engaged with the hinge projections (or concave portions) 13a, 13b of the case body 12. Further, on the outer surfaces of the two side wall portions 21b, 21c, engagement projections (or recesses) 23a, 23b are provided to engage the engagement recesses (or projections) 14a, 14b of the case body 12.

The hinge recesses (or projections) 22a, 22b of the transparent cover 21 are engaged with the hinge projections (or concave portions) 13a, 13b of the case body 12 rotatably to attach the transparent cover 21 to the case body 12, to form the accommodating case 11. The transparent cover 21 is rotated toward the open case body 12 so as to close the accommodating space a in the direction shown by an arrow A in Figure 3. Then, the engagement projections (or recesses) 23a, 23b are engaged with the engagement recesses (or projections) of the case body 12, whereby the transparent cover 21 is brought to a position at which it closes the accommodating space a of the case body 12.

When the disc cartridge C is accommodated in the accommodating case 11, the disc cartridge C engages at its four corner portions in the resilient holding members 15a to 15d disposed on the bottom wall 12d of the case body 12 by the resilient biasing-force under the condition that the transparent cover 21 is opened.

A song text card or index sheet S is accommodated in the pocket portion 21d on the inner surface of the transparent cover 21 as shown by an arrow B in Figure 3. A label L also can be accommodated within the pocket portion 21d.

Since the disc cartridge case 11 of the first embodiment holds and accommodates the disc cartridge C at four corners by the four resilient holding members 15a to 15d disposed on the case body 12, the circumferential side surfaces of the disc cartridge C are very widely exposed between the resilient hold members 15a to 15d. Therefore, the user can hold the disc cartridge C easily and reliably regardless of size of fingers when accommodating or withdrawing the disc cartridge C. Accordingly, the disc cartridge C can be smoothly inserted into and withdrawn from the disc cartridge case 11. Further, under the condition that the disc cartridge C is accommodated in the disc cartridge case 11, the disc cartridge C is held by the resilient biasing-force of the resilient holding members 15a to 15d with the result that the disc cartridge C can be prevented from being violently moved and from being dropped out of the disc cartridge case 11. Hence, the disc cartridge C can be held within the disc cartridge case 11 reliably.

Also, when the song text card or the index sheet S is to be accommodated in the pocket portion 21d of the transparent cover 21, the user merely has to insert them into the pocket portion 21d. Thus, they can be inserted into and taken out from the pocket portion 21d of the transparent cover 21 with great ease.

In addition, since the disc cartridge case 11 of the first embodiment is composed of only two members comprising the case body 12 and the transparent cover 21, the cost of materials thereof can be reduced and the assembly process thereof can be simplified, which can provide an inexpensive disc cartridge case.

While four resilient holding members 15a to 15d are disposed on the bottom wall portion of the case body in association with the respective corners of the disc cartridge as described above, the number of the resilient hold members can be reduced, as will be described below.

Figure 10 shows a second embodiment in which the disc cartridge C can be held by two resilient holding members 31a, 31b disposed on the bottom wall 12d of the case body 12 so as to oppose each other along a line diagonally across the disc cartridge C.

In this case, the width of the disc cartridge C becomes different in front and rear and in left and right so that, if the disc cartridge C is incorrectly orientated as shown by a one-dot chain line in Figure 10, then the disc cartridge C cannot be accommodated within the disc cartridge case 11. If the disc cartridge C is inserted into the disc cartridge case 11 from the reverse direction in front and rear, the disc cartridge C can be accommodated into the disc cartridge case 11.

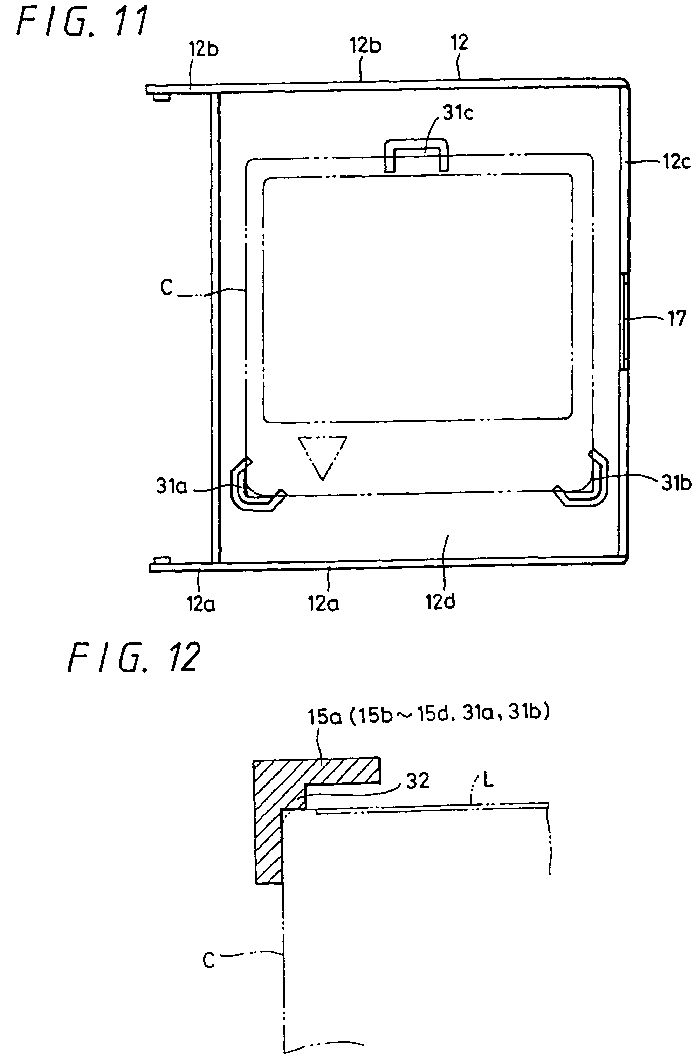

Figure 11 shows a third embodiment in which three resilient holding members 31a, 31b, 31c are disposed on the bottom wall 12d of the case body 12.

The resilient holding members 31a, 31b are angular in cross section to hold the corner portions and are provided on the bottom wall 12d at its portions corresponding to two corner portions at the ends of one side surface of four front, rear, left and right side surfaces. The third resilient holding member 31c, which is rectangular in cross section to hold a flat surface, is in contact with substantially a middle part of the other side surface opposing the above-mentioned one side surface. Thus, the disc cartridge C is held at three positions.

In the second and third embodiments shown in Figures 10 and 11, the area in which the circumferential side surface of the disc cartridge C is exposed under the condition that the disc cartridge C is held by the resilient holding members is increased compared with that of the first embodiment in which the disc cartridge C is held at the four corner portions. Therefore, the user can engage the disc cartridge C with fingers more easily. Hence, the disc cartridge C can be inserted into and taken out from the disc cartridge case 11 more easily.

Figure 12 shows a modified resilient holding member wherein a step 32 is formed in the inner side corner portion of the rectangular resilient holding members 15a to 15d, 31a and 31b which hold the corner portions of the disc cartridge C, so that the resilient holding members can be prevented from contacting the label L bonded onto the disc cartridge C. Hence, the label L will not be damaged or torn off.

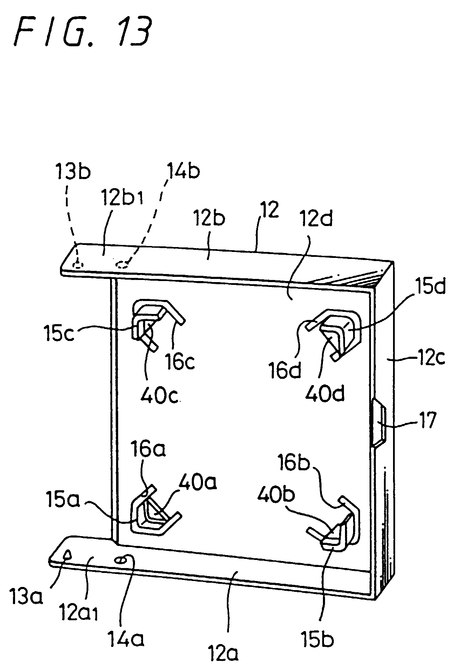

In the case body 12 of the first to third embodiments, a plurality of resilient holding members 15 are formed on the bottom wall 12d of the case body 12 and the disc cartridge C is accommodated within the space formed by these resilient holding members 15. The major surface portion of the disc cartridge C is brought into contact with the bottom wall 12d of the case body 12. When the disc cartridge C is to be withdrawn from the case body 12, the user removes the disc cartridge C from the case body 12 by engaging fingers in the spacings between the outer circumferential surface of the disc cartridge C and the two side wall portions 12a, 12b of the case body 12. If, however, the disc cartridge C is thin and no spacing is formed between the major surface portion of the disc cartridge C and the bottom wall 12d of the case body 12, it may be difficult to remove the disc cartridge C from the disc case 12 satisfactorily. A fourth embodiment of disc cartridge case, which can obviate this disadvantage is shown in Figures 13 to 15 in which like parts corresponding to those of the first embodiment are marked with the same references and therefore are not again described in detail.

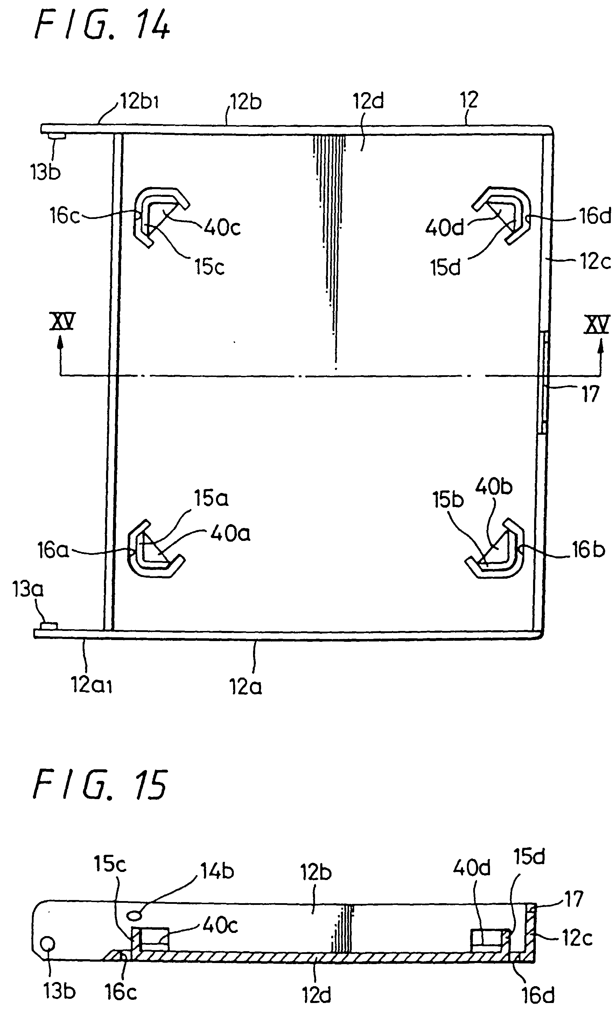

Figure 13 shows a perspective view of the case body 12; Figure 14 shows a plan view of the case body; and Figure 15 shows a cross-sectional view of the case body 12 taken on line XV-XV in Figure 14.

As illustrated, the transparent cover 21 is rotatably attached to the case body 12 as in the first embodiment.

A plurality of resilient holding members 15a to 15d which are substantially L-shaped in cross-section are integrally formed on the bottom wall 12d of the case body 12. The resilient holding members 15a to 15d have integrally formed therewith support pads 40a to 40d on which the disc cartridge C is supported. The support pads 40a to 40d are formed on the inner L-shaped portions of the resilient holding members 15a to 15d of substantially L-shaped configuration in cross section with a predetermined level difference from the bottom wall 12d of the case body 12.

Accordingly, when the disc cartridge C is accommodated in the case body 12, the disc cartridge C is resiliently held by the resilient holding members 15a to 15d and supported on the support pads 40a to 40d. A predetermined spacing is thus set between the disc cartridge C and the bottom wall 12d of the case body 12 with the result that the disc cartridge C is held spaced apart from the bottom wall 12d of the case body 12.

In the fourth embodiment when the disc cartridge C is to be removed from the case body 12, it can be removed from the disc case 12 more easily due to the spacing between the case body 12 and the bottom wall 12d.

The synthetic resin to be used to mould the case body and the cover is not limited to those described above and a wide variety of synthetic resins may be utilized.

The disc cartridge case of the invention is particularly suitable as a portable disc cartridge case.

## Claims

1. A case (11) for a disc cartridge comprising:
a cover (21); and
a case body (12) having the cover (21) rotatably attached thereto and having integrally formed on its bottom wall (12d) a plurality of resilient holding members (15a to 15d) resiliently to hold a disc cartridge (C);
characterised in that slots (16a to 16d) are formed through the bottom wall (12d) of the case body (12) around and adjacent outer circumferential surfaces of the resilient holding members (15a to 15d) so that portions of the bottom wall (12d) on which the resilient members (15a to 15d) are formed can be displaced in a direction perpendicular to the plane of the bottom wall (12d).

2. A case according to claim 1, wherein the case body (12) further includes means (40a to 40d) to form a predetermined spacing between the disc cartridge (C) and the bottom wall (12d) of the case body.

3. A case according to claim 3, wherein said means are support pads (40a to 40d) formed on the resilient holding members (15a to 15d).

4. A case according to any one of claims 1 to 3, wherein:
the cover (21) is made of a transparent synthetic resin and has on its inside wall a pocket (21d) in which a paper slip (S) can be accommodated; and
the case body (12) includes a pair of parallel side walls (12a, 12b) by which the first member (21) is rotatably attached and a wall portion (12c) to couple the pair of side walls (12a, 12b), the plurality of resilient holding members (15a to 15d) being formed on corner regions of the bottom wall (12d).

## Patentansprüche

1. Behälter (11) für eine Plattenkassette mit:
einem Deckel (21) und
einem Behältergehäuse (12), an dem der Deckel (21) drehbar befestigt ist und an dessen Bodenwand (12d) mehrere elastische Haltelemente (15a-15d) zum elastischen Halten einer Plattenkassette (C) einteilig angeformt sind,
dadurch **gekennzeichnet**,
daß Schlitze (16a-16d) durch die Bodenwand (12d) des Behältergehäuses (12) um und angrenzend an äußere Umfangsflächen der elastischen Halteelemente (15a-15d) ausgebildet sind, so daß Bereiche der Bodenwand (12d), an denen die elastischen Elemente (15a-15d) ausgebildet sind, in einer Richtung senkrecht zur Ebene der Bodenwand (12d) bewegt werden können.

2. Behälter nach Anspruch 1, in welchem das Behältergehäuse (12) weiterhin Mittel (40a-40d) zur Bildung eines vorbestimmten Zwischenraumes zwischen der Plattenkassette (C) und der Bodenwand (12d) des Behältergehäuses umfaßt.

3. Behälter nach Anspruch 2, in welchem die Mittel an den elastischen Halteelementen (15a-15d) angebrachte Stützkissen sind.

4. Behälter nach wenigstens einem der Ansprüche 1 bis 3, in welchem
der Deckel (21) aus transparentem Kunstharz hergestellt ist und an seiner Innenwand eine Tasche (21d) aufweist, in das ein Papierstreifen (S) untergebracht werden kann und
das Behältergehäuse (12) ein Paar paralleler Seitenwände (12a, 12b), an denen das erste Element (21) drehbar angeordnet ist, und einen Wandabschnitt zur Verbindung des Paares Seitenwände (12a, 12b) aufweist, wobei die elastischen Halteelemente (15a-15d) an Eckbereichen der Bodenwand (12d) ausgebildet sind.

## Revendications

1. Boîtier (11) pour une cartouche de disque comportant :
un couvercle (21); et
un corps de boîtier (12) ayant le couvercle (21) fixé de façon rotative dessus et ayant sur sa paroi de fond (12d) plusieurs éléments élastiques de maintien (15a à 15d) formés d'un seul tenant et destinés à mainténir élastiquement une cartouche de disque (C);
caractérisé en ce que des fentes (16a à 16d) sont formées à travers la paroi de fond (12d) du corps de boîtier (12) autour et de façon adjacente à des surfaces circonférentielles externes des éléments élastiques de maintien (15a à 15d) de sorte que des parties de la paroi de fond (12d) sur lesquelles sont formés les éléments élastiques (15a à 15d) peuvent être déplacées dans une direction perpendiculaire au plan de la paroi de fond (12d).

2. Boîtier selon la revendication 1, dans lequel le corps de boîtier (12) comprend en outre des moyens (40a à 40d) destinés à former un espace prédéterminé entre la cartouche de disque (C) et la paroi de fond (12d) du corps de boîtier.

3. Boîtier selon la revendication 3, caractérisé en ce que lesdits moyens sont des patins de support (40a à 40d) formés sur les éléments élastiques de maintien (15a à 15d).

4. Boîtier selon l'une quelconque des revendications 1 à 3, dans lequel :
le couvercle (21) est fabriqué en résine synthétique transparente et a sur sa paroi intérieure un logement (21d) dans lequel peut être logée une feuille de papier (S); et
le corps de boîtier (12) comprend une paire de parois latérales parallèles (12a, 12b) grâce auxquelles le premier élément (21) est fixé de façon rotative et une partie de paroi (12c) destinée à relier la paire de parois latérales (12a, 12b), la multiplicité d'éléments élastiques de maintien (15a à 15d) étant formée sur des zones de coin de la paroi de fond (12d).
